# FASCICULE DE BREVET EUROPEEN

(11) **EP 2 334 445 B1**
(45) Date de publication et mention de la délivrance du brevet: **11.11.2015**
(21) Numéro de dépôt: 09760166.0
(22) Date de dépôt: 16.10.2009
(51) Int. Cl.: B05D 5/08, A47J 36/02

(54) **ARTICLE CULINAIRE COMPORTANT UN REVÊTEMENT ANTIADHÉSIF PRÉSENTANT DES PROPRIÉTÉS AMÉLIORÉES D'ADHÉRENCE AU SUPPORT**
KOCHARTIKEL MIT NICHT KLEBRIGEM ÜBERZUG MIT VERBESSERTEN SUBSTRATHAFTUNGSEIGENSCHAFTEN
COOKING ITEM COMPRISING A NON-STICK COATING WITH IMPROVED PROPERTIES OF ADHESION TO THE SUBSTRATE

(30) Priorité: 16.10.2008 FR 0857044
(43) Date de publication de la demande: 22.06.2011
(73) Titulaire: Seb S.A., 69130 Ecully (FR)
(72) Inventeur: LE BRIS, Stéphanie, F-73190 Challes Les Eaux (FR); DUBANCHET, Aurélien, F-73100 Gresy sur Aix (FR); PERILLON, Jean-Luc, F-26130 Saint Paul Trois Chateaux (FR)
(74) Mandataire: Novagraaf Technologies
(86) Numéro de dépôt international: PCT/FR2009/051981
(87) Numéro de publication internationale: WO 2010/043827

(56) Documents cités:
- US-A- 5 037 675
- US-A1- 2003 138 661

## Description

La présente invention concerne de manière générale des articles culinaires comportant un revêtement antiadhésif, et plus particulièrement des articles culinaires comportant un revêtement antiadhésif de type vitreux présentant des propriétés améliorées d'adhérence au support. La présente invention concerne également un procédé de fabrication d'un tel article culinaire.

Par revêtement du type vitreux, on entend au sens de la présente invention un revêtement qui a l'apparence du verre ou d'un émail, qui peut être soit organo-minéral, soit entièrement minéral ;

Par revêtement vitreux organo-minéral, on entend au sens de la présente invention, un revêtement constitué d'un matériau de type sol-gel (c'est-à-dire obtenu par voie sol-gel) dont le réseau est essentiellement inorganique, mais qui comporte des groupements organiques, notamment en raison des précurseurs utilisés et de la température de cuisson du revêtement.

Par revêtement entièrement minéral, on entend, au sens de la présente invention, un revêtement constitué d'un matériau entièrement inorganique, exempt de tout groupement organique. Un tel revêtement peut également être obtenu par voie sol-gel avec une température de cuisson d'au moins 400°C, ou à partir de précurseurs de type tétraéthoxy-silane (TEOS) avec une température de cuisson qui peut être inférieure à 400°C.

Dans le domaine revêtements antiadhésifs de type vitreux destinés à des ustensiles culinaires, on connaît les revêtements sol-gel, et notamment ceux obtenus à partir d'alcoxydes métalliques à base de silice (silanes) ou à base d'alumine (aluminates). Ainsi par exemple, la demande de brevet américain US 2003/0138661 décrit un article culinaire revêtu d'un revêtement protecteur en polymère inorganique, notamment en matériau sol-gel. Plus particulièrement, US 2003/0138661 décrit un article culinaire comprenant :
- un support métallique (notamment en aluminium et en aluminium anodisé) présentant une face interne et une face externe,
- un revêtement en polymère inorganique formé par application d'une composition sol-gel (comprenant une suspension colloïdale de particules d'alcoxydes métalliques dans un solvant organique), formé sur l'une au moins des faces de l'article, mais de préférence sur la face externe, et
- optionnellement un revêtement antiadhésif à base de PTFE peut être déposé sur la face interne du support.

De préférence, le revêtement de polymère inorganique présente une épaisseur de moins de 10 µm, et mieux, de moins de 3.

Il n'est pas du tout fait mention dans US 2003/0138661 d'une base dure en émail entre le support et le revêtement sol-gel.

Ces revêtements ont actuellement un développement important dans le domaine des articles culinaires, car ils permettent d'obtenir des revêtements colorés qui résistent particulièrement bien à la rayure et à la température.

Cependant, de tels revêtements ont une adhérence limitée sur des supports métalliques, notamment des supports en aluminium, en acier inoxydable ou en fonte.

Pour remédier à ces problèmes, il est connu de l'homme du métier de préparer la surface de support par un traitement chimique (par exemple du type décapage chimique) ou mécanique (par exemple par brossage ou sablage), ou encore une combinaison de ces traitements.

Toutefois, même lorsque de tels traitements sont mis en oeuvre, l'adhérence au support du revêtement antiadhésif reste limitée, en particulier lorsque le revêtement antiadhésif est soumis à une déformation mécanique telle qu'un choc ou un perçage, par exemple pour fixer un rivet ou un goujon d'assemblage.

Ainsi, lorsque des articles culinaires dont le fond présente une face intérieure revêtue d'un revêtement antiadhésif de type sol-gel sont soumis à des chocs violents, on observe un marquage sous l'impact, qui s'accompagne de fissures se propageant radialement, et ce, même si la face intérieure du fond a été préalablement sablée ou brossée.

Il s'ensuit que des précautions importantes doivent être prises lors de la fabrication de tels articles culinaires, ce qui se traduit par des taux de rebuts élevés et des cadences de production faibles.

Pour remédier à ces problèmes d'adhérence limitée au support rencontrés dans les revêtements vitreux de type sol-gel, la demanderesse a découvert de manière surprenante que le renforcement de la face intérieure du fond de l'article culinaire par une base dure émaillée et discontinue permet d'améliorer significativement l'adhérence du revêtement antiadhésif sur des supports métalliques (en particulier en aluminium ou en alliage d'aluminium), qui se manifeste notamment par une tenue à l'impact améliorée du revêtement antiadhésif.

Par tenue à l'impact, on entend, au sens de la présente invention, l'aptitude du revêtement à résister à un choc violent.

Par opposition, un revêtement ayant une faible tenue à l'impact, présente après un choc violent (ou un impact) un marquage sous l'impact, qui s'accompagne de fissures se propageant radialement. L'adhérence dans cette zone devient si faible qu'un simple grattage de l'ongle permet d'enlever une partie du revêtement dont la taille est en fait bien supérieure à celle de l'impact lui-même.

Il est connu de l'homme de l'art d'utiliser une base dure émaillée sous un revêtement antiadhésif d'article culinaire. Ainsi, le brevet américain US 5,037,675 décrit un article culinaire comprenant un support en aluminium sur la surface intérieure duquel est déposée une première couche discontinue d'émail recouvrant 20 à 60% de la surface intérieure du support, puis deux couches successives d'un revêtement à base de résine fluorocarbonée. Toutefois, il ne s'agit pas d'un revêtement vitreux de type sol-gel.

En particulier, la présente invention a pour objet un article culinaire comprenant un support métallique présentant une face intérieure concave destinée à être disposée du côté des aliments susceptibles et une face extérieure convexe destinée à être disposée vers la source de chaleur, ladite face intérieure étant revêtue successivement à partir du support d'une base dure et d'un revêtement antiadhésif recouvrant ladite base dure, caractérisé en ce que :
▪ la base dure est une couche d'émail discontinue se présentant sous forme d'une dispersion superficielle de gouttes d'émail réparties de manière homogène sur la face intérieure dudit article, avec un taux de recouvrement de la face intérieure compris entre 40% et 80%, une densité surfacique comprise entre 300 gouttes/mm², et 2000 gouttes/mm² et une taille de gouttes comprise entre 2 µm et 50 µm, et
▪ ledit revêtement antiadhésif est un revêtement de type vitreux exempt de PTFE se présentant sous forme d'un film continu ayant une épaisseur d'au moins 10 um et constitué d'un matériau sol-gel comprenant une matrice d'au moins un polyalcoxylate métallique et au moins 5% en poids par rapport au poids total du revêtement d'au moins un oxyde métallique dispersé dans ladite matrice.

Par émail, on entend au sens de la présente invention, un émail présentant un point de ramollissement inférieur à la température de fusion du support.

Par exemple, dans le cas d'un support en aluminium ou en alliage d'aluminium présentant une température de fusion de l'ordre de 600 °C, le point de ramollissement de l'émail est inférieur à cette température.

Par dispersion superficielle de gouttes d'émail, on entend au sens de la présente invention, une couche d'émail discontinue se présentant à l'état divisé sur un support (en l'occurrence celui de l'article culinaire), de sorte que la rugosité de cette couche est créée par les gouttes d'émail dispersées.

Par taux de recouvrement du support, on entend au sens de la présente invention, le rapport, exprimé en pourcentage, de la surface du support effectivement couverte par la dispersion superficielle de gouttes d'émail sur la surface totale du support pouvant être couverte par la base dure.

Par rugosité de surface Ra, on entend, au sens de la présente invention, l'écart moyen arithmétique entre les creux et les pics de la surface par rapport à la ligne médiane (ou moyenne), cet écart étant estimé selon la Norme ISO 4287.

On observe que la présence d'une telle base dure émaillée et discontinue disposée entre le support et le revêtement antiadhésif de type sol-gel conduit à une amélioration significative de la tenue à l'impact du revêtement antiadhésif.

En ce qui concerne plus particulièrement la base dure émaillée et discontinue, celle-ci présente une rugosité de surface Ra qui dépend en fait de celle de la face intérieure du support sur laquelle elle est déposée.

Ainsi, dans le cas d'un support dont la face intérieure a été préalablement sablée avant le dépôt de la base dure et présente une rugosité de surface Ra comprise entre 3 et 8 µm, la base dure émaillée et discontinue présente alors une rugosité de surface Ra comprise entre 9 et 12 µm.

Par contre, dans le cas d'un support dont la face intérieure est lisse, la base dure émaillée et discontinue qui la recouvre présente alors une rugosité de surface Ra comprise entre 2 et 4 µm.

Avantageusement, la base dure émaillée et discontinue présente une dureté égale ou supérieure à celle du métal et/ou de l'alliage métallique constitutif du support.

En ce qui concerne maintenant le revêtement recouvrant la face intérieure structurée, et en particulier le matériau sol-gel constitutif de ce revêtement, la matrice de ce matériau peut avantageusement comprendre les produits de condensation de polyalcoxylates métalliques, par exemple un ou des polyalcoxysilanes, un aluminate, un titanate, un zirconate, un vanadate, un borate ou leurs mélanges.

D'une manière préférée, la matrice du revêtement selon l'invention comprend un polyalcoxysilane et/ou un aluminate de manière à constituer une matrice mixte.

Dans une variante de l'invention, la matrice du revêtement selon l'invention est greffée par un ou plusieurs groupements organiques choisis parmi les groupements alkyles en C₁-C₄ et les groupements phényle. Ces groupements sont nécessaires pour améliorer l'hydrophobicité du revêtement. Afin d'obtenir une meilleure stabilité thermique du revêtement, les chaînes courtes sont privilégiées dans le cadre de la présente invention.

De manière préférée, la matrice du revêtement selon l'invention est greffée par un ou plusieurs groupements méthyle, qui améliorent le caractère hydrophobe du revêtement sans gêner la formation du réseau inorganique.

Outre la matrice d'au moins un polyalcoxylate métallique, le revêtement vitreux selon l'invention comprend au moins 5% en poids, et de préférence de 5 à 30% en poids par rapport au poids total du revêtement d'au moins un oxyde métallique, qui est de préférence finement dispersé dans la matrice. Cet oxyde métallique se présente généralement sous forme colloïdale sous forme d'agrégats, dont la taille est inférieure à un micron, voire à 300 ou 400 nm.

A titre d'oxyde métallique colloïdal utilisable dans le revêtement antiadhésif selon l'invention, on peut notamment citer la silice, l'alumine, l'oxyde de cérium, l'oxyde de zinc, l'oxyde de vanadium et l'oxyde de zirconium. Les oxydes métalliques colloïdaux préférés sont la silice et l'alumine.

La présence d'un oxyde métallique dans la matrice du revêtement selon l'invention permet d'obtenir un film d'une épaisseur suffisante, à savoir une épaisseur d'au moins 10 µm. Si l'épaisseur du revêtement est inférieure à 10 µm, la résistance mécanique du film formé est insuffisante.

De préférence, le film a une épaisseur comprise entre 10 et 80 µm, et mieux entre 30 et 50 µm de sorte que la pellicule ainsi formée est continue, cohérente et suffisante pour absorber la rugosité du support.

De manière avantageuse, le matériau sol-gel constitutif du revêtement antiadhésif peut en outre comprendre au moins une huile de silicone pour améliorer le caractère hydrophobe de la surface du revêtement, et notamment après une agression thermique du type passage à la flamme.

En effet, le polyalcoxylate métallique présente des groupements hydrophobes qui sont détruits à haute température lors d'un passage à la flamme. Mais cette disparition du caractère hydrophobe est momentanée, car elle est progressivement compensée par l'huile de silicone piégée dans le polyalcoxylate et dont la migration en surface en quantités infinitésimales favorise la reconstitution progressive des groupements hydrophobes à la surface du film.

On observe qu'avec un revêtement selon l'invention comprenant au moins 0,1% en poids d'huile de silicone, la reconstitution du caractère hydrophobe est suffisante au moment d'une nouvelle cuisson. En effet, la valeur de l'angle de contact statique Θ d'une goutte d'eau déposée sur le revêtement de l'invention est de l'ordre de 20° après une agression thermique du type passage à la flamme. Cette valeur d'angle de contact statique remonte à au moins 75° après un processus de reconstitution des propriétés hydrophobes consistant en un réchauffage de la température ambiante à 200°C, sur une période d'au moins 5 minutes, c'est-à-dire lorsque l'ustensile est prêt pour une nouvelle cuisson.

De préférence, l'huile de silicone représente 0,1 à 6% en poids et mieux 0,3 à 5% en poids du poids total du revêtement (état sec). Au-dessous de 0,1% en poids d'huile de silicone, la reconstitution des groupements hydrophobes ayant disparu lors d'un passage à la flamme (600°C) est moindre, l'angle obtenu étant inférieur à 62°.

De manière davantage préférée, le matériau sol-gel du revêtement selon l'invention comprend 0.5 à 2% en poids d'huile de silicone par rapport au poids total du revêtement sec. Dans ce cas, l'angle de contact statique Θ initial d'une goutte d'eau déposée sur un tel revêtement est de 95°. Ce revêtement après une agression thermique du type passage à la flamme présente un angle de 20°. Après un processus de reconstitution comprenant au moins une étape de réchauffage de la température ambiante à 200°C sur une période d'au moins 5 minutes, l'angle de contact statique devient supérieur à 75° lorsque l'ustensile est prêt pour une nouvelle cuisson.

Le revêtement selon l'invention peut comprendre une huile silicone ou un mélange d'huiles silicones.

A titre d'huiles silicones utilisables dans le revêtement selon l'invention, on peut notamment citer les phényl silicones, les méthyl-phényl silicones et les méthyl silicones.

Si le revêtement selon l'invention est utilisé pour être en contact avec des aliments, on choisira de préférence une huile silicone de grade alimentaire, et en particulier une huile choisie parmi les méthyl-phényl silicones et les méthyl silicones de grade alimentaire.

A titre d'huiles méthyl-phényl silicones, on peut notamment citer les huiles non alimentaires commercialisées par la société WACKER sous la dénomination commerciale WACKER SILICONOL AP150 et par la société DOW CORNING sous la dénomination commerciale DOW CORNING 550 fluid, ainsi que les huiles alimentaires commercialisées par la société WACKER AR00. A titre d'huiles méthyl silicones, on peut notamment citer l'huile commercialisée par la société RHODIA sous la dénomination commerciale RHODIA 47 V 350, l'huile de la société WACKER 200 fluid, ou encore l'huile de la société TEGO ZV 9207, qui sont des huiles méthylsilicones de grade alimentaire.

De préférence, on utilisera une huile de silicone choisie parmi celles mentionnées ci-dessus, avec un poids moléculaire d'au moins 1000 g/mol, qui est non réactive et présente une viscosité comprise entre 20 et 2000 mPa.s.

De manière avantageuse, le matériau sol-gel du revêtement selon l'invention peut en outre comprendre des charges pour améliorer les propriétés mécaniques du revêtement formé, et/ou des pigments, pour conférer de la couleur au revêtement. En outre, la présence de charges et/ou de pigments a également un effet bénéfique sur la dureté du film.

A titre de charges utilisables dans le revêtement selon l'invention, on peut notamment citer l'alumine, la zircone, le mica, les argiles (comme la montmorillonite, la sépiolite, la gypsite, la kaolinite et la laponite^{®}) et le phosphate de zirconium.

A titre de pigments utilisables dans le revêtement selon l'invention, on peut notamment citer le dioxyde de titane, les oxydes mixtes de cuivre-chrome-manganèse, les oxydes de fer, le noir de carbone, le rouge de pyralène, les aluminosilicates, les paillettes métalliques et notamment les paillettes d'aluminium.

De préférence, les charges et/ou les pigments sont sous forme de paillettes, ce qui présente l'avantage d'améliorer la dureté du revêtement antiadhésif.

De préférence, le pigment et/ou les charges sont de taille nanométrique, afin d'améliorer leur dispersion et leur répartition dans le revêtement, conférant à celui-ci une grande régularité de performance.

Dans une version avantageuse de l'article culinaire selon l'invention, le support est une calotte creuse d'un article culinaire, présentant un fond et une paroi latérale s'élevant à partir dudit fond.

Le support de l'article culinaire selon l'invention est avantageusement réalisé en un matériau choisi parmi les métaux, le verre et les céramiques.

On conseille les supports métalliques, et de préférence les supports en aluminium ou en alliage d'aluminium, anodisé ou non, en acier inoxydable, en fonte, en fer, ou en cuivre.

A titre d'alliages d'aluminium susceptibles d'être utilisés pour réaliser le support de l'article culinaire selon l'invention, on conseille les alliages d'aluminium émaillables faiblement alliés, et en particulier :
- les aluminiums « purs » à 99% d'aluminium de la série 1000, et par exemple les alliages 1050, 1100, 1200 et 1350,
- les alliages d'aluminium et de manganèse de la série 3000, et par exemple les alliages 3003, 3004, 3105 et 3005,
- les alliages d'aluminium et de silicium de la série 4000,
- les alliages d'aluminium et de magnésium de la série 5000, et par exemple les alliages 5005, 5050 et 5052, et
- les alliages d'aluminium, silicium et magnésium de la série 6000, et par exemple les alliages 6053, 6060, 6063, 6101 et 6951, et
- les alliages d'aluminium, fer, silicium de la série 8000, et par exemple l'alliage 8128.

Enfin, la présente invention concerne également un procédé de fabrication d'un article culinaire, caractérisé en ce qu'il comprend les étapes suivantes :
a) une étape de fourniture d'un support présentant la forme finale de l'article culinaire avec une face intérieure concave destinée à être disposée du côté des aliments susceptibles d'être introduits dans ledit article, et une face extérieure convexe destinée à être disposée du côté d'une source de chaleur;
b) de manière optionnelle, une étape de traitement de la face intérieure du support, pour obtenir une face intérieure traitée adaptée à l'adhérence d'une base dure sur le support ;
c) une étape de réalisation d'une base dure adhérente sur ladite face intérieure du support, préalablement traitée ou non ;
d) une étape de réalisation d'un revêtement antiadhésif sur ladite base dure formée à l'étape c) ;
   ledit procédé étant caractérisé en ce que :
   - l'étape c) de réalisation d'une base dure émaillée et discontinue comprend les étapes successives suivantes :
      ▪ c1) la préparation d'une barbotine aqueuse de fritte d'émail ;
      ▪ c2) l'application par pulvérisation pneumatique de la barbotine sur la face intérieure du support avec une pression égale supérieure à 4 bars de manière que la quantité de barbotine déposée soit comprise entre 0,07g/dm² et 0,2 g/dm²; puis
      ▪ c3) séchage et/ou cuisson de ladite couche d'émail pour former un biscuit sec d'émail ou une couche d'émail cuite ; et
   - l'étape d) de réalisation du revêtement antiadhésif sur ledit biscuit sec d'émail ou ladite couche d'émail cuite comprend les étapes successives suivantes :
      ▪ d1) la préparation d'une composition sol-gel (A + B) comprenant au moins un oxyde métallique colloïdal et au moins un précurseur de type oxyde métallique ;
      ▪ d2) l'application sur tout ou partie du biscuit sec d'émail ou de ladite couche d'émail cuite d'au moins une couche de la composition sol-gel (A+B) ayant une épaisseur d'au moins 20 µm à l'état humide ; puis
      ▪ d3) la cuisson de ladite couche de composition sol-gel (A+B) pour obtenir un revêtement vitreux antiadhésif d'au moins 10 µm d'épaisseur.

Avantageusement, la fritte d'émail présente moins de 50 ppm de cadmium et moins de 50 ppm de plomb, et comportant 30 à 40% en poids de silice et 15 à 30% en poids d'oxyde de titane, moins de 10% en poids d'oxyde de vanadium et moins de 4% en poids de d'oxyde de lithium par rapport au poids total de la fritte, et la barbotine aqueuse comporte au moins 20% en poids de charges minérales par rapport au poids total de barbotine.

En ce qui concerne la réalisation de la base dure sur la face intérieure du support, on n'applique pas, dans la présente invention, un composé homogène dont la structure après durcissement est déterminée par sa composition chimique initiale avant durcissement, à la différence d'un procédé par arc électrique ou par projection de plasma. En effet, dans la présente invention, on applique une barbotine aqueuse de fritte d'émail et on observe que lors du séchage et/ou de la cuisson se produit une homogénéisation des différents éléments fusibles de la barbotine, ceux provenant de la fritte d'émail et ceux provenant de sa formulation en barbotine. Dans la présente invention, il n'y a donc pas de correspondance univoque entre la composition de la barbotine et la structure de l'émail formé après application et cuisson de cette barbotine.

Le procédé de la présente invention présente l'avantage de mettre en oeuvre une barbotine aqueuse de fritte d'émail qui ne comprend pas de solvants et donc ne génère pas de COV, et la fritte d'émail utilisée dans le procédé selon l'invention ne contient quasiment pas d'éléments nocifs tels que le plomb ou le cadmium ou seulement à l'état de traces (au plus 50 ppm d'un élément nocif), de sorte que l'émail ainsi obtenu respecte la législation dans le domaine alimentaire tant au niveau de la formulation de la fritte d'émail, qu'au niveau de la formulation de la barbotine.

Selon une première variante de réalisation du procédé de l'invention, lors de l'étape c) de réalisation d'une base dure émaillée et discontinue, la couche d'émail non cuite est simplement séchée à une température comprise entre 120 et 200°C, pour donner un biscuit émaillé.

Selon une deuxième variante de réalisation du procédé de l'invention, lors de l'étape c) de réalisation d'une base dure émaillée et discontinue, la couche d'émail non cuite est soumise à un étuvage à une température comprise entre 500 et 580°C.

En ce qui concerne la réalisation du revêtement antiadhésif de type sol-gel, la composition sol-gel A+B est préparée comme suit :
i) préparation d'une composition aqueuse A comprenant 5 à 30% en poids par rapport au poids total de la composition aqueuse A d'au moins un oxyde métallique, et 0 à 20% en poids par rapport au poids de la composition A d'un solvant comprenant au moins un alcool ; puis
ii) préparation d'une solution B comprenant au moins un précurseur de type alcoxyde métallique ; puis
iii) mélange de la solution B d'alcoxyde métallique avec la composition aqueuse A pour obtenir une composition sol-gel (A+B) avec 40 à 75% en poids de composition aqueuse A par rapport au poids de la composition sol-gel (A+B), de manière que la quantité d'oxyde métallique colloïdal représente 5 à 30% poids de la composition sol-gel (A+B) à l'état sec.

En ce qui concerne plus particulièrement la préparation de la composition aqueuse A, il est nécessaire d'incorporer au moins 5% en poids d'au moins un oxyde métallique par rapport en poids total de la composition A pour former un film ayant après cuisson une épaisseur d'au moins 10 microns. Si par contre on a plus de 30% en poids par rapport au poids de la composition A, celle-ci n'est plus stable.

L'oxyde métallique de la composition aqueuse A est tel que défini ci-dessus. Il s'agit de préférence d'un oxyde métallique colloïdal choisi parmi la silice colloïdale et/ou l'alumine colloïdale.

La présence d'un solvant à base d'alcool est optionnelle, mais présente l'avantage d'améliorer la compatibilité de la composition aqueuse A avec la solution B d'alcoxyde métallique.

Il est toutefois possible de travailler sans solvant, mais dans ce cas, le choix des polyalcoxylates est réduit à ceux présentant une excellente compatibilité avec l'eau. Une quantité excessive de solvant (supérieure à 20%), est possible, mais génère inutilement des composés organiques volatiles, ce qui n'est pas favorable pour l'environnement.

On utilise de préférence à titre de solvant dans la composition aqueuse A de l'invention un solvant alcoolique oxygéné ou un éther-alcool.

La composition aqueuse A selon l'invention peut également comprendre, outre l'oxyde métallique colloïdal et, le cas échéant, le solvant à base d'alcool, au moins une huile de silicone, qui est de préférence présente dans la composition A à raison de 0,05% à 3% en poids par rapport au poids total de la composition.

Avec une composition aqueuse A comprenant 0.5 à 2% en poids d'huile de silicone, on obtient un revêtement présentant des propriétés hydrophobes reconstituables dans le cadre d'un processus d'utilisation culinaire. L'huile de silicone de la composition A est une huile silicone de grade alimentaire définie ci-dessus.

La composition aqueuse A de l'invention peut également comprendre des charges et/ou des pigments, qui sont tels que définis ci-dessus.

La composition aqueuse A de l'invention peut en outre comprendre de la silice pyrogénée, qui a pour fonction de régler la viscosité de la composition sol-gel et/ou la brillance du revêtement sec.

En ce qui concerne la préparation de la solution B, on utilise de préférence à titre de précurseur un alcoxyde métallique choisi dans le groupe constitué par :
- les précurseurs répondant à la formule générale M₁(OR₁)ₙ,
- les précurseurs répondant à la formule générale M₂(OR₂)₍ₙ₋₁₎R₂', et
- les précurseurs répondant à la formule générale M₃(OR₃)₍ₙ₋₂₎R₃'₂, avec :
   R₁, R₂, R₃ ou R₃' désignant un groupement alkyle,
   R₂' désignant un groupement alkyle ou phényle,
   n étant un nombre entier correspondant à la valence maximale des métaux M₁, M₂ ou M₃,
   M₁ M₂ ou M₃ désignant un métal choisi parmi Si, Zr, Ti, Sn, Al, Ce, V, Nb, Hf, Mg ou Ln,

Avantageusement, l'alcoxyde métallique de la solution B est un alcoxysilane.

A titre d'alcoxysilanes utilisables dans la solution B du procédé de l'invention, on peut notamment citer le méthyltriméthoxysilane (MTMS), le tétraéthoxysilane (TEOS), le méthyltriéthoxysilane (MTES), le diméthyldiméthoxysilane, et leurs mélanges.

De manière préférée, on utilisera les alcoxysilanes MTES et TEOS, car ils présentent l'avantage de ne pas contenir de groupements méthoxy. En effet l'hydrolyse des methoxy conduit à la formation de methanol dans la formulation sol-gel, ce qui compte tenu de son classement toxique nécessite des précautions supplémentaires lors de l'application. A contrario l'hydrolyse des groupements ethoxy ne génère que de l'ethanol possédant un classement plus favorable et donc des prescriptions d'utilisations moins contraignantes pour le revêtement solgel.

Selon un mode de réalisation avantageux du procédé de l'invention la solution B peut comprendre un mélange d'un alcoxylane tel que défini ci-dessus et un alcoxyde d'aluminium.

Le précurseur de type alcoxyde métallique de la solution B est mélangé avec un acide organique, minéral, de Lewis qui représente 0,01 à 10% en poids du poids total de la solution B.

A titre d'acides utilisables pour mélanger avec le précurseur d'alcoxyde métallique, on peut notamment citer l'acide acétique, l'acide citrique, l'acéto-acétate d'éthyle l'acide chlohydrique ou l'acide formique.

Les acides préférés selon l'invention sont des acides organiques, et plus particulièrement l'acide acétique et l'acide formique.

Après la préparation de la composition aqueuse A et celle de la solution B de précurseur, on les mélange ensemble, pour former une composition sol-gel (A+B). Les quantités respectives de chacune des compositions A et B doivent être ajustées de manière que la quantité de silice colloïdale dans la composition sol-gel représente 5 à 30% en poids sur le sec.

La composition sol-gel (A + B) de l'invention peut être appliquée sur le support par pulvérisation ou par tout autre mode d'application, tel qu'au trempé, au tampon, au pinceau, au rouleau, par spin-coating ou par sérigraphie. Cependant, dans le cadre d'un objet en forme, la pulvérisation par exemple au moyen d'un pistolet, présente l'avantage de former un film homogène et continu, qui, après cuisson, forme un revêtement continu, d'épaisseur régulière et étanche.

Après application de la composition sol-gel (A+B) selon l'invention, on procède généralement à un séchage, de préférence à 60°C, pendant 1 minute.

La nature du revêtement antiadhésif évolue en fonction de la température de cuisson, d'un revêtement, organo-minéral pour une température de cuisson de l'ordre de 200°C vers un revêtement essentiellement minéral pour des températures de cuisson plus élevées.

Pour une température de cuisson inférieure à 400°C, notamment entre 180 et 350°C, le revêtement antiadhésif est un revêtement organo-minéral (sauf si le précurseur est un TEOS uniquement : dans ce cas on aurait un revêtement essentiellement minéral, et ce, même à des températures de cuisson inférieures à 400°C).

A titre de support utilisable pour réaliser l'article culinaire selon l'invention, on utilisera avantageusement une calotte creuse telle que décrite précédemment, présentant un fond et une paroi latérale s'élevant à partir du fond.

Le support utilisable dans le cadre de la présente invention pourra avantageusement être réalisé un matériau choisi parmi les métaux, le verre et les céramiques.

A titre de supports métalliques utilisables dans le procédé selon l'invention, on peut avantageusement citer les supports en aluminium ou en alliage d'aluminium, anodisé ou non, en acier inoxydable, en fonte, en fer, ou encore en cuivre.

Le procédé selon l'invention peut en outre comprendre une étape de dépôt d'une couche d'émail sur la face opposée à celle revêtue d'un revêtement antiadhésif selon l'invention, cette étape de dépôt de la couche d'émail étant réalisée préalablement à celle du revêtement antiadhésif selon l'invention.

Outre les avantages mentionnés ci-dessus, le procédé conforme à l'invention est particulièrement simple de mise en oeuvre et peut facilement être envisagé sans bouleversement des processus de fabrication classique des articles culinaires.

D'autres avantages et particularités de la présente invention résulteront de la description qui va suivre, donnée à titre d'exemple non limitatif et faite en référence aux figures annexées :
- la figure 1 représente une vue schématique en coupe d'un article culinaire conforme à l'art antérieur selon une première variante de réalisation (support lisse),
- la figure 2 représente une vue schématique en coupe d'un article culinaire conforme à l'art antérieur selon une deuxième variante de réalisation (support sablé),
- la figure 3 représente une vue schématique en coupe d'un article culinaire conforme à l'invention selon une première variante de réalisation (support lisse), et
- la figure 4 représente une vue schématique en coupe d'un article culinaire conforme à l'invention selon une deuxième variante de réalisation (support sablé),

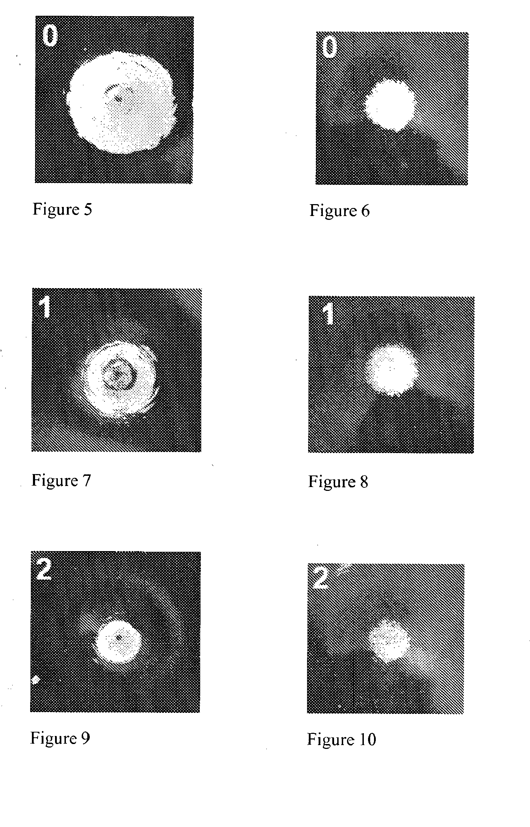

- les figures 5 à 15 représentent une succession de vues de dessus d'un support métallique revêtu d'un revêtement antiadhésif après des tests de tenue à l'impact du revêtement antiadhésif selon le test d'Erichsen conformément à la norme ISO 6272 pour constituer une échelle visuelle d'évaluation de tenue à l'impact: les figures 5, 7, 9, 11, 13 et 15 sont des vues du support obtenues lorsque le choc est réalisé sur la face intérieure avec le revêtement antiadhésif (test d'embouti intérieur), tandis que les figures 6, 8, 10, 12 et 14 sont des vues du support lorsque le choc est réalisé sur la face opposée à celle munie du revêtement antiadhésif (test d'embouti extérieur),
- la figure 16 représente une vue de dessus de l'article culinaire de la figure 2 à l'issue du test d'Erichsen, et
- la figure 17 représente une vue de dessus de l'article culinaire de la figure 4 à l'issue du test d'Erichsen.

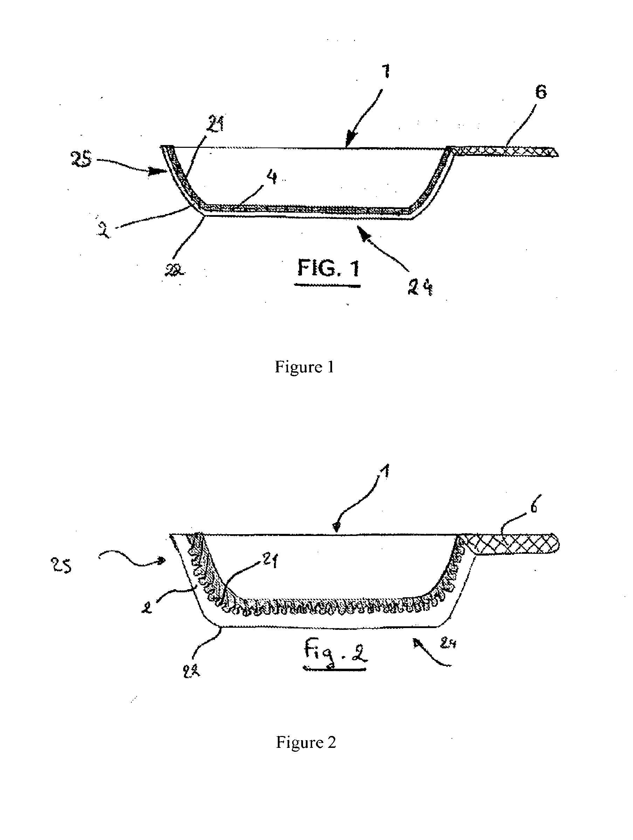

Les éléments identiques représentés sur les figures 1 à 4 sont identifiés par des références numériques identiques.

Sur les figures 1 à 4, on a représenté, à titre d'exemple d'article culinaire selon l'art antérieur, une poêle 1 comprenant un support 2 se présentant sous forme de calotte creuse avec un fond 24 et une paroi latérale 25 s'élevant à partir du fond 34, et une poignée de préhension 6. Le support 2 comprend une face intérieure 21 pouvant recevoir des aliments, et une face extérieure 22 destinée à être disposée du côté de la source de chaleur, telle qu'une plaque de cuisson ou un brûleur.

La figure 1 montre en particulier un article culinaire conforme à l'art antérieur dont la face intérieure 21 du support, qui est lisse, est revêtue d'un revêtement antiadhésif 4 vitreux de type sol-gel, conforme à celui de la présente invention.

La figure 2 montre un article culinaire conforme à l'art antérieur dont la face intérieure 21 a été dégraissée puis sablée et présente une rugosité de surface Ra entre 3 µm et 8 µm. Cette face intérieure 21 sablée est également revêtue d'un revêtement antiadhésif vitreux 4 de type sol gel conforme à la présente invention.

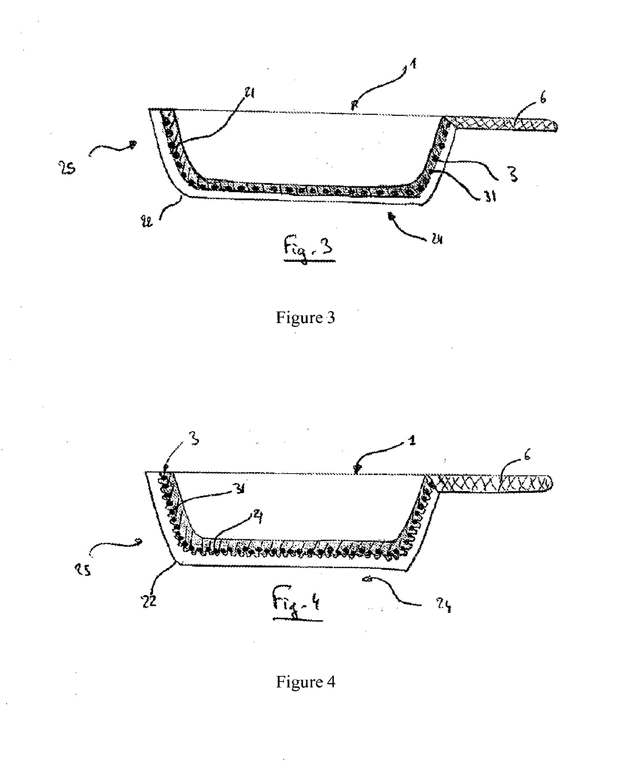

Les figures 3 et 4 montrent deux variantes de réalisation d'un article culinaire conforme à l'invention. Pour ces deux variantes de réalisation, la face intérieure 21 est revêtue successivement à partir du support 2, d'une base dure en émail 3 conforme à la présente invention et d'un revêtement antiadhésif 4 vitreux, également conforme à la présente invention.

Selon la variante de réalisation représentée sur la figure 3, la face intérieure 21 est lisse. Dans ce cas, la rugosité de surface Ra de la base dure 3 est comprise entre 2 µm et 4 µm.

Selon la variante de réalisation représentée sur la figure 4, la face intérieure 21 a été préalablement dégraissée et sablée de manière à présenter une rugosité de surface Ra comprise entre 3 et 8 µm. Dans ce cas, la rugosité de surface Ra de la base dure 3 est comprise entre 9 et 12 µm.

Pour les deux variantes de réalisation de l'article culinaire conformes à l'invention représentées sur les figures 3 et 4, la base dure 3 est une couche d'émail discontinue comprenant une dispersion superficielle de gouttes d'émail 31 solidifiées, qui présentent une taille moyenne entre 2 µm et 50 µm et qui sont réparties de manière homogène à la surface de la face intérieure 21, avec un taux de revêtement de la face intérieure entre 40 et 80%, et une densité surfacique comprise entre 300 gouttes/mm² et 2000 gouttes/mm².

Pour les deux variantes de réalisation, les gouttes d'émail 31 dispersées à la surface de la face intérieure 21 sont noyées dans la couche de revêtement antiadhésif 4, de manière à permettre l'accrochage du revêtement antiadhésif 4 à la base dure 3 en émail. Une telle base dure 3 émaillée sous forme de dispersion superficielle de gouttes d'émail permet d'améliorer significativement l'adhérence du revêtement antiadhésif 4 sur le support 2, et en particulier la tenue à l'impact.

On donne ci-après deux modes de réalisation d'un article culinaire 1 conforme à l'invention selon les première ou deuxième variantes de réalisation telles que représentées sur les figures 3 et 4 respectivement. Ces deux modes de réalisation comprennent les étapes successives suivantes :
- a) fourniture d'un support 2, présentant la forme finale de l'article culinaire avec une face intérieure 21 destinée à être disposée du côté des aliments susceptibles d'être introduits dans ledit article 1, et une face extérieure 22 destinée à être disposée du côté d'une source de chaleur ;
- c) réalisation d'une base dure 3 sur ladite face intérieure 21 dudit support 2 ; puis
- d) réalisation d'un revêtement antiadhésif 4 sur la couche dure 3 formée à l'étape c) par voie sol-gel conformément au procédé de l'invention.

Pour le premier mode de réalisation, l'étape c) de réalisation d'une base dure 3 est réalisée directement sur la face intérieure 21 du support, sans que celle-ci n'ait été préalablement préparée chimiquement ou mécaniquement (face intérieure 21 lisse).

Par contre, le deuxième mode de réalisation de l'article selon l'invention comprend en outre, entre les étapes a) de fourniture d'un support et c) de réalisation d'une base dure sur la face intérieure du support, une étape b) de préparation de la surface de la face intérieure 21 comprenant le dégraissage de ladite surface puis un traitement mécanique tel que le sablage ou le brossage.

Pour les deux modes de réalisation de l'article culinaire selon l'invention, l'étape c) de réalisation de la base dure (3) comprend les étapes successives suivantes :
c1) préparation d'une barbotine aqueuse de fritte d'émail, ladite fritte d'émail présentant moins de 50 ppm de plomb et moins de 50 ppm de cadmium, et comportant 30 à 40% en poids de silice et 15 à 30% en poids d'oxyde de titane, moins de 10% en poids d'oxyde de vanadium et moins de 4% en poids de d'oxyde de lithium par rapport au poids total de la fritte, ladite barbotine aqueuse comportant au moins 20% en poids de charges minérales par rapport au poids total de barbotine.
c2) application par pulvérisation pneumatique de la barbotine sur la face 21 du support 2 avec une pression de pulvérisation égale ou supérieure à 4 bars et une quantité d'émail déposée sur ladite face intérieure 21 compris entre 0,07g/dm² et 0,2 g/dm² (en l'occurrence une quantité de barbotine d'émail de 0,8 g pour une poêle dont le fond présente un diamètre de 26 cm) ; puis séchage ;
c3) séchage (à une température entre 120°C et 200°C) et/ou cuisson de ladite couche d'émail 3 (à une température comprise entre 540 et 580°C pendant au moins 5 à 7 minutes, de préférence de l'ordre de 550°C) le séchage et/ou la cuisson étant réalisée avant la réalisation du revêtement antiadhésif 4 de ladite couche d'émail 3.

De manière avantageuse, la fritte d'émail comprend :
Al₂O₃ : moins de 1% ;
B₂O₃ : moins de 1% ;
BaO : moins de 1% ;
K₂O : 5 à 20% ;
Li₂O : moins de 4% ;
Na₂O : 10 à 25% ;
P₂O₅ : moins de 4% ;
SiO₂ : 30 à 40% ;
TiO₂ : 15 à 30% ;
V₂O₅ : moins de 10% ;
les teneurs indiquées étant des pourcentages en poids par rapport au poids de la fritte.

De manière avantageuse, la barbotine de fritte d'émail comporte en outre :
quartz : 5 à 30% ;
SiC : 10 à 30% ;
Pigment : 1 à 10%.
Agent de suspension : 2 à 10% ;
les teneurs indiquées étant des pourcentages massiques par rapport au poids total de la barbotine.

Les exemples suivants illustrent l'invention sans toutefois en limiter la portée.

Dans les exemples, sauf indication contraire, toutes les quantités sont données en grammes.

### EXEMPLES

### Produits

### Fritte d'émail :

Al₂O₃
B₂O₃
B₄O
K₂O
Li₂O
Na₂O
P₂O₅
SiO₂
TiO₂
V₂O₅

### Revêtement sol-gel (A+B) :

### Composition aqueuse A

Oxyde métallique colloïdal : silice colloïdale sous forme de solution aqueuse à 30% de silice, commercialisée par la société Clariant sous la dénomination commerciale Klebosol.

### Solvant : isopropanol

Huile de silicone : huile méthyl silicone de grade alimentaire commercialisée par la société TEGO sous la dénomination commerciale « TEGO ZV 9207 ».

Pigment : pigment noir minéral commercialisé par la société Ferro sous la dénomination commerciale « FA 1260 »

### Solution B

### Précurseurs :

- méthyltriéthoxysilane (MTES) répondant à la formule Si (OCH₂CH₃)₃CH₃,
- méthyltriéthoxysilane (MTMS) répondant à la formule Si (OCH₃)₃CH₃,

Acide :acide acétique

### Test

### Tenue à l'impact du revêtement antiadhésif évaluée au moyen du test d'Erichsen conformément à la norme ISO 6272.

Il s'agit d'un test d'essai au choc par chute d'une bille de 2 kg dont la hauteur de chute est de 50 cm . On utilise pour les essais des plaquettes en aluminium, dont l'une des faces est revêtues d'un revêtement antiadhésif de type sol-gel conforme à la présente invention. Les plaquettes sont toutes identiques entre elles (en terme d'épaisseur et de nature de l'alliage) afin d'avoir une déformation constante pour tous les essais.

Ce test comprend la réalisation d'un choc directement sur le revêtement antiadhésif déposée sur la face revêtue d'une plaquette (test d'embouti intérieur) et un choc sur la face opposée à celle revêtue du revêtement antiadhésif d'une autre plaquette (test d'embouti extérieur).

Après la réalisation des chocs, on procède à un examen visuel de la face revêtue du revêtement antiadhésif.

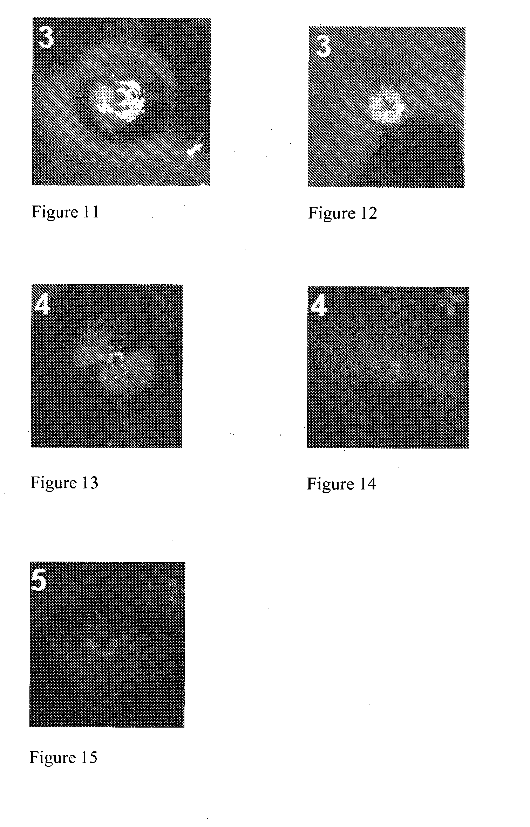

La tenue à l'impact du revêtement antiadhésif est estimée selon l'échelle visuelle suivante, qui est établie d'une part après un choc directement sur le revêtement antiadhésif (test d'embouti intérieur), et d'autre part sur la face opposée à celle revêtue du revêtement antiadhésif (test d'embouti extérieur) :
- on attribue **la notation 0** si l'on observe :
   ▪ pour le test d'embouti intérieur :
      au niveau de l'impact, une complète délamination du revêtement antiadhésif sur toute la surface déformée de la face intérieure qui se manifeste par l'apparition d'une zone « blanche » au niveau de l'impact (correspondant à une portion de surface métallique sans revêtement), se présentant sous forme d'un disque ayant un diamètre de l'ordre de 25 mm, comme illustré sur la figure 5 ;
   ▪ pour le test d'embouti extérieur :
      également une complète délamination du revêtement antiadhésif sur une large surface de la face intérieure déformée, qui se manifeste par l'apparition d'une zone « blanche » au niveau de l'impact (correspondant à une portion de surface métallique sans revêtement), cette zone se présentant sous forme d'un disque ayant un diamètre d'au moins 10 mm, comme illustré sur la figure 6 ;
- on attribue **la notation 1** si l'on observe :
   ▪ pour le test d'embouti intérieur :
      au niveau de l'impact, une délamination quasi complète du revêtement antiadhésif sur une large surface de la face intérieure déformée,
      cette délamination se manifestant par l'apparition d'une zone presque « blanche » au niveau de l'impact (correspondant à une portion de surface métallique sans revêtement), cette zone se présentant sous forme d'un disque ayant un diamètre de l'ordre de 20 mm comme illustré sur la figure 7 ;
   ▪ pour le test d'embouti extérieur :
      une délamination quasi-complète du revêtement antiadhésif sur une surface moyenne de la face intérieure déformée, qui se manifeste par l'apparition d'une zone « blanche » sans revêtement au niveau de l'impact, se présentant sous forme d'un disque ayant un diamètre de l'ordre de 10 mm, comme illustré sur la figure 8 ;
- on attribue **la notation 2** si l'on observe :
   ▪ pour le test d'embouti intérieur :
      au niveau de l'impact, une délamination quasi complète du revêtement antiadhésif sur une surface moyenne de la face intérieure revêtue,
      qui se manifeste par l'apparition d'une zone « blanche » sans revêtement au niveau de l'impact, se présentant sous forme d'un disque ayant un diamètre de l'ordre de 10 mm, comme illustré sur la figure 9 ;
   ▪ pour le test d'embouti extérieur :
      au niveau de l'impact une zone blanche sous forme d'un disque de diamètre inférieur à 10 mm, dans lequel sont localisés des éclats larges allant jusqu'à la surface métallique du support, avec une densité relativement élevée d'éclats, comme illustré sur la figure 10 ;
- on attribue **la notation 3** si l'on observe :
   ▪ pour le test d'embouti intérieur :
      au niveau de l'impact, une zone centrale dans laquelle sont localisés des éclats larges laissant apparaître le métal, comme illustré sur la figure 11 ;
   ▪ pour le test d'embouti extérieur :
      au niveau de l'impact, une surface blanche sous forme de disque dont le diamètre est inférieur à 10 mm, et dans lequel sont localisés des éclats fins allant jusqu'au métal avec une densité moyennement élevé, comme illustré sur la figure 12 ;
- on attribue **la notation 4** si l'on observe :
   ▪ pour le test d'embouti intérieur :
      au niveau de l'impact, une zone sous forme d'un disque de petit diamètre, dans laquelle sont localisés des éclats fins allant jusqu'au métal avec une densité assez faible, comme illustré sur la figure 13 ;
   ▪ pour le test d'embouti extérieur quelques piqures allant jusqu'au métal, qui sont localisées au niveau de l'impact, comme illustré sur la figure 14 ;
- enfin, on attribue **la notation 5** si l'on observe :
   ▪ pour le test d'embouti intérieur :
      au niveau de l'impact, un léger halo un peu plus clair que le revêtement antiadhésif, comme illustré sur la figure 15 ;
   ▪ pour le test d'embouti extérieur :
      pas de modifications de l'aspect du revêtement antiadhésif (non illustré dans l'échelle visuelle utilisée dans la présente demande).

### EXEMPLE 1

### Préparation d'une fritte d'émail F conforme à la fritte d'émail utilisée dans le procédé de l'invention.

On a réalisé une fritte d'émail F conforme à la fritte d'émail utilisée dans le procédé de l'invention, par fusion à 1200°C des constituants suivants :
Al₂O₃ : 0.1%
B₂O₃ : 0.6%
BaO : 0.3%
K₂O : 12%
Li₂O : 2.3%
Na₂O : 19%
P₂O₅ : 1.6%
SiO₂ : 35%
TiO₂ : 23.5%
V₂O₅ : 5.2%

Le mélange fondu obtenu est ensuite broyé pour donner une fritte pulvérulente F ayant une granulométrie moyenne de 15 µm et un coefficient de dilation linéaire de 494.10⁻⁷ m.K⁻¹.

### EXEMPLE 2

### Préparation d'un exemple de barbotine B' de fritte d'émail conforme à la barbotine utilisée dans le procédé de l'invention.

La fritte d'émail F est formulée sous la forme d'une barbotine B, en mélangeant les constituants suivants (parties en poids) :
Fritte d'émail F : 70 ;
Eau : 55 ;
Quartz : 25 ;
SiC : 23 ;
Pigment noir à base d'oxydes de Fe et de Mn : 5.
Acide borique : 4.

La barbotine B' ainsi obtenue présente une densité de 1.70 g/cm³, et un étalement (« set-up ») de 1300 g/m².

Par étalement, on entend ici la quantité de matière nécessaire pour couvrir uniformément après application une surface donnée.

### EXEMPLE 3

### Réalisation d'une composition de revêtement antiadhésif R conforme à celui de la présente invention.

Pour la réalisation d'une composition de revêtement antiadhésif R conforme à l'invention, on procède comme suit :
3.1) on prépare une composition aqueuse A à base de silice colloïdale, conformément au procédé de l'invention ;
3.2) et 3.3) on prépare une solution B à base de MTES ou à base de MTMS, conformément au procédé de l'invention ;
3.4) et 3.5) on réalise, à partir de la composition aqueuse A et de la solution B, une composition sol-gel (A+B), conformément au procédé de l'invention.

### 3.1 préparation d'une composition aqueuse A à base de silice colloïdale.

On a réalisé une composition aqueuse A à base de silice colloïdale, qui est présentée dans le tableau 1 :

**Tableau 1**

| ***Constituants de la partie A*** | ***Quantité (g)*** |
|---|---|
| solution aqueuse à 30% de silice colloïdale : Klebosol | 42 |
| Eau | 16 |
| Isopropanol | 8 |
| Pigment noir FA 1220 | 33 |
| Huile silicone TEGO ZV 9207 | 1 |
| **TOTAL** | **100** |

### 3.2 préparation d'une solution B selon l'invention à base de MTES.

On réalise une solution B en mélangeant 59,4 g de MTES à 2.4 g d'acide acétique, donnant une solution à 4% en poids d'acide dans le MTES.

### 3.3 préparation d'une solution B selon l'invention à base de MTMS.

On réalise une solution B en mélangeant 59,4 g de MTMS à 0,6 g d'acide acétique, donnant une solution à 1% en poids d'acide dans le MTMS.

### 3.4 : préparation d'un premier exemple composition sol-gel SG selon l'invention (à partir de MTES)

On réalise une première composition sol-gel SG selon l'invention en ajoutant, à 100 g de composition aqueuse A selon l'invention, 61.8 g de la solution B de l'exemple 1.2. On mélange, dans un mélangeur planétaire pendant une heure en conservant une température inférieure à 60°C, à l'issue de laquelle on obtient une composition sol-gel selon l'invention SG qui est conservée à température ambiante. La composition SG est laissée à maturer pendant 24 heures à température ambiante après mélange, avant application sur un support.

### 3.5 préparation d'un deuxième exemple de composition sol-gel SG selon l'invention (à partir de MTMS)

On réalise une première composition sol-gel SG selon l'invention en ajoutant, à 100 g de composition aqueuse A selon l'invention, 60 g de solution B de l'exemple 1.3. On mélange, dans un mélangeur planétaire pendant une heure en conservant une température inférieure à 60°C, à l'issue de laquelle on obtient une composition sol-gel selon l'invention SG qui est conservée à température ambiante. La composition SG est laissée à maturer pendant 24 heures à température ambiante après mélange, avant application sur un support.

### EXEMPLE 4

### Réalisation d'un premier exemple d'article culinaire selon l'invention : support sablé + base dure émaillée discontinue.

On utilise à titre de support une calotte en aluminium obtenue par formage d'un disque en aluminium (de type 1200), la calotte ainsi formée ayant un fond dont le diamètre est d'environ 26 cm.

Cette calotte est dégraissée par aspersion d'une solution alcaline, et la face intérieure du fond de la calotte est sablée (par du corindon), aboutissant à une rugosité de surface Ra entre 2 et 4 µm.

Puis, on applique sur la face intérieure sablée, au moyen d'un pistolet pneumatique, la barbotine B', de manière à former une couche discontinue se présentant sous forme de gouttelettes disjointes. La calotte ainsi revêtue est séchée à une température de 140°C, puis vitrifiée à 555°C pendant 5 minutes, de manière à obtenir une couche dure discontinue d'épaisseur 50 µm. La rugosité Ra de cette base dure continue est comprise entre 9 µm et 12 µm.

Après refroidissement de cette base dure, on réalise le revêtement antiadhésif R en appliquant sur la base dure 3 émaillée discontinue, la composition sol-gel SG de l'exemple 3.4 (obtenue à partir d'une solution B à base de MTES), selon le cycle suivant :
- application sur le support d'une couche de composition sol-gel SG de l'exemple 3, avec une épaisseur humide de 40 à 70 microns,
- séchage pendant 1 minute à 60°C, et
- refroidissement à la température ambiante.

Il est possible d'appliquer plusieurs fois ce cycle, le nombre de cycles étant déterminé par l'épaisseur finale souhaitée.

A l'issue du ou des cycles d'application/séchage, on étuve pendant 15 minutes à 270°C. On obtient alors un article culinaire avec un revêtement antiadhésif présentant une épaisseur sèche comprise de l'ordre de 35 microns (± 5 µm, et qui est lisse, noir et brillant.

L'article culinaire selon l'invention de l'exemple 4 est représenté sur la figure 4.

### EXEMPLE 5 :

### Réalisation d'un deuxième exemple d'article culinaire selon l'invention : support sablé + base dure émaillée discontinue.

On procède de la même manière qu'à l'exemple 4, mais en utilisant la composition sol-gel SG de l'exemple 3.5 (obtenue à partir d'une solution B à base de MTMS).

L'article culinaire de l'exemple 5 est également représenté sur la figure 4.

### EXEMPLE 6 :

### Réalisation d'un troisième exemple d'article culinaire selon l'invention : support lisse + base dure émaillée discontinue.

On utilise comme support le même que celui de l'exemple 4, hormis le fait que la face intérieure 21 du support 2 n'est pas soumise à un traitement mécanique et reste lisse.

Par contre, pour la réalisation de la couche d'émail 3, on procède de la même manière qu'à l'exemple 4.

Pour la réalisation du revêtement sol-gel SG sur cette base dure 3, on procède de la même manière qu'à l'exemple 4, en utilisant la composition sol-gel SG de l'exemple 3.4 (obtenue à partir d'une solution B à base de MTMS)

L'article culinaire de l'exemple 6 est représenté sur la figure 3.

### EXEMPLE 7 :

### Réalisation d'un deuxième exemple d'article culinaire selon l'invention : support lisse + base dure émaillée discontinue.

On procède de la même manière qu'à l'exemple 6, mais en utilisant la composition sol-gel SG de l'exemple 3.5 (obtenue à partir d'une solution B à base de MTMS).

L'article culinaire de l'exemple 7 est également représenté sur la figure 3.

### EXEMPLE 8

### Réalisation d'un premier exemple d'article culinaire témoin : support sablé mais sans base dure.

On utilise comme support 2 le même que celui de l'exemple 4 (support sablé).

Dans cet exemple, on ne réalise pas de couche dure émaillée discontinue sur la face intérieure 21 du support 2. Par conséquent, le revêtement antiadhésif 4 est réalisé directement sur la face intérieure 21 du support, préalablement dégraissée puis sablée, en procédant de la même manière qu'à l'exemple 4, c'est-à-dire en utilisant le revêtement sol gel de l'exemple 3.4 à base de MTES.

L'article culinaire de l'exemple 8 est représenté sur la figure 2.

### EXEMPLE 9

### Réalisation d'un deuxième exemple d'article culinaire témoin : support sablé mais sans base dure.

On procède de la même manière qu'à l'exemple 8, mais en utilisant la composition sol-gel SG de l'exemple 3.5 (obtenue à partir d'une solution B à base de MTMS).

L'article culinaire de l'exemple 9 est représenté sur la figure 2.

### EXEMPLE 10

### Réalisation d'un troisième exemple d'article culinaire témoin : support lisse mais sans base dure.

On utilise comme support 2 le même que celui de l'exemple 6 (support lisse). Puis, on procède à la réalisation du revêtement antiadhésif 4 directement sur la face intérieure 21 du support 2 restée lisse, de manière analogue à l'exemple 8 (revêtement sol gel de l'exemple 3.4 à base de MTES).

L'article culinaire de l'exemple 10 est représenté sur la figure 1.

### EXEMPLE 11

### Réalisation d'un troisième exemple d'article culinaire témoin : support lisse mais sans base dure.

On procède de la même manière qu'à l'exemple 10, mais en utilisant la composition sol-gel SG de l'exemple 3.5 (obtenue à partir d'une solution B à base de MTMS).

L'article culinaire de l'exemple 11 est représenté sur la figure 1.

### EXEMPLE 12 : Test d'Erichsen.

On évalue la tenue à l'impact selon le test d'Erichsen des articles culinaires témoin des exemples 8 à 11 (représentés sur les figures 2 et 1 respectivement) et des articles culinaires selon l'invention des exemples 4 à 7 (représentés sur les figures 4 et 3 respectivement).

Les résultats des tests d'Erichsen obtenus d'une part avec les poêles selon l'invention des exemples 4 et 5 (support sablé, figure 4), 6 et 7 (support lisse, figure 3), et d'autre part avec les poêles témoin des exemples 8 et 9 (support sablé, figure 2), 10 et 11 (support lisse, figure 1) sont des observations visuelles traduites en une note variant entre 0 et 5 selon l'échelle visuelle précédemment indiquée et illustrée par les figures 5 à 15, qui sont toutes à la même échelle. Ces résultats sont présentés dans le tableau 2 ci-après.

**Tableau 2**

| | Résultats du test d'Erichsen : notation selon l'échelle visuelle (1-5) | |
|---|---|---|
| | Embouti intérieur | Embouti extérieur |
| Article culinaire selon l'invention avec support sablé (MTES, ex. 4, fig. 4) | 3 | 4 |
| Article culinaire selon l'invention avec support sablé (MTMS, ex. 5, fig. 4) | 3 | 4 |
| Article culinaire selon l'invention avec support lisse (MTES, ex. 6, fig. 3) | 1 | 4 |
| Article culinaire selon l'invention avec support lisse (MTMS, ex. 7, fig. 3) | 1 | 4 |
| Article culinaire témoin avec support sablé (MTES, ex. 8, fig. 2 et 16) | 2 | 2 |
| Article culinaire témoin avec support sablé (MTMS, ex. 9, fig. 2 et 16) | 2 | 2 |
| Article culinaire témoin avec support lisse (MTES, ex. 10, fig. 1) | 0 | 0 |
| Article culinaire témoin avec support lisse (MTMS, ex. 11, fig. 1) | 0 | 0 |

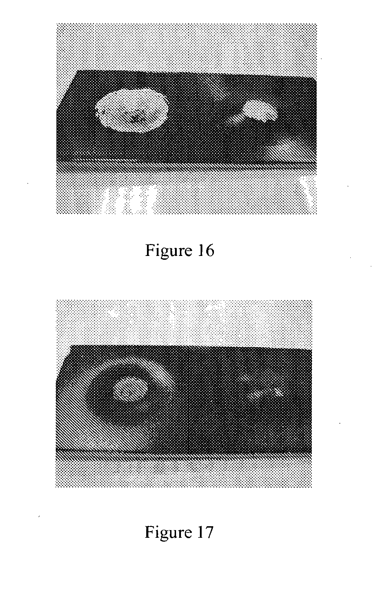

La figure 16 représente (sur la même figure) l'état du revêtement antiadhésif d'une part après un test d'embouti intérieur (partie gauche de la figure 16), et d'autre part après un test d'embouti extérieur (partie droite de la figure 16) d'un support métallique sablé comprenant un revêtement antiadhésif 4 sans base dure 3.

La figure 16 correspond bien aux figures 9 et 10 de l'échelle visuelle (notation 2).

La figure 17 représente (sur la même figure) l'état du revêtement antiadhésif d'une part après un test d'embouti intérieur (partie gauche de la figure 17), et d'autre part après un test d'embouti extérieur (partie droite de la figure 17) d'un support métallique sablé recouvert successivement d'une base dure 3 et d'un revêtement antiadhésif 4, conformément à la présente invention. La figure 17 correspond bien aux figures 11 et 14.

Les résultats présentés dans le tableau 2 et illustrés sur les figures 16 et 17 montrent que la formation d'une base dure émaillée sur la surface de la face intérieure permet d'améliorer les propriétés d'adhérence au support d'un revêtement antiadhésif de type sol-gel.

Un sablage préalable renforce davantage les propriétés d'adhérence au support. Toutefois, le sablage seul du support (sans base dure conforme à l'invention) ne permet pas d'apporter des résultats satisfaisant en terme d'adhérence au support.

## Revendications

1. Article culinaire (1) comprenant un support métallique (2) présentant une face intérieure (21) concave destinée à être disposée du côté des aliments susceptibles d'être introduits dans ledit article et une face extérieure (22) convexe destinée à être disposée vers la source de chaleur, ladite face intérieure (21) étant revêtue successivement à partir du support (2) d'une base dure (3) et d'un revêtement antiadhésif (4) recouvrant ladite base dure (3),
**caractérisé en ce que** :
▪ la base dure (3) est une couche d'émail discontinue se présentant sous forme d'une dispersion superficielle de gouttes d'émail réparties de manière homogène sur la face intérieure (21) dudit article (1), avec un taux de recouvrement de la face intérieure (21) compris entre 40% et 80%, une densité surfacique comprise entre 300 gouttes/mm², et 2000 gouttes/mm² et une taille de gouttes comprise entre 2 µm et 50 µm, et
▪ ledit revêtement antiadhésif (4) est un revêtement de type vitreux se présentant sous forme d'un film continu ayant une épaisseur d'au moins 10 µm et constitué d'un matériau sol-gel comprenant une matrice d'au moins un polyalcoxylate métallique et au moins 5% en poids par rapport au poids total du revêtement d'au moins un oxyde métallique dispersé dans ladite matrice.

2. Article culinaire (1) selon la revendication 1, **caractérisé en ce que** la face intérieure (21) du support (2) est sablée et présente une rugosité de surface Ra comprise entre 3 µm et 8 µm.

3. Article culinaire (1) selon la revendication 2, **caractérisé en ce que** la base dure (3) émaillée et discontinue présente une rugosité de surface Ra entre 9 µm et 12 µm.

4. Article culinaire (1) selon la revendication 1, **caractérisé en ce que** la face intérieure (21) du support (2) est lisse.

5. Article culinaire (1) selon la revendication 4, **caractérisé en ce que** la base dure (3) émaillée et discontinue présente une rugosité de surface entre 2 µm et 4 µm.

6. Article culinaire (1) selon l'une quelconque des revendications précédentes, **caractérisé en ce que** la base dure (3) émaillée et discontinue présente une dureté égale ou supérieure à celle du métal ou de l'alliage métallique constitutif du support (2).

7. Article culinaire (1) selon l'une quelconque des revendications précédentes, **caractérisé en ce que** le polyalcoxylate métallique est un polyalcoxysilane.

8. Article culinaire (1) selon l'une quelconque des revendications 1 à 6, **caractérisé en ce que** le polyalcoxylate métallique est un aluminate.

9. Article culinaire (1) selon l'une quelconque des revendications 1 à 6, **caractérisé en ce que** le matériau sol-gel comprend une matrice mixte de polyalcoxysilane et d'aluminate.

10. Article culinaire (1) selon l'une quelconque des revendications précédentes, **caractérisé en ce que** l'oxyde métallique est choisi dans le groupe constitué de la silice, l'alumine, l'oxyde de cérium, l'oxyde de zinc, l'oxyde de vanadium et l'oxyde de zirconium.

11. Article (1) selon l'une quelconque des revendications précédentes, **caractérisé en ce que** le matériau sol-gel constitutif dudit revêtement antiadhésif (2) comprend en outre au moins une huile de silicone, qui est de préférence choisie parmi les méthyl-phényl silicones et les méthyl silicones.

12. Procédé de fabrication d'un article culinaire (1), **caractérisé en ce qu'**il comprend les étapes suivantes :
a) une étape de fourniture d'un support (2) présentant la forme finale de l'article culinaire avec une face intérieure (21) concave destinée à être disposée du côté des aliments susceptibles d'être introduits dans ledit article (1), et une face extérieure (22) convexe destinée à être disposée du côté d'une source de chaleur;
b) de manière optionnelle, une étape de traitement de la face intérieure (21) du support (3) pour obtenir une face intérieure (21) traitée adaptée à l'adhérence d'une base dure (3) sur le support (2), ladite étape de traitement pouvant être une étape de traitement mécanique de type sablage ;
c) une étape de réalisation d'une base dure (3) adhérente sur ladite face intérieure (21) du support (2), préalablement traitée ou non ;
d) une étape de réalisation d'un revêtement antiadhésif (4) sur ladite base dure (3) formée à l'étape c) ;
ledit procédé étant **caractérisé en ce que** l'étape c) de réalisation d'une base dure (3) émaillée et discontinue comprend les étapes successives suivantes :
• c1) la préparation d'une barbotine aqueuse de fritte d'émail ;
• c2) l'application par pulvérisation pneumatique de la barbotine sur la face intérieure (21) du support (2) avec une pression égale supérieure à 4 bars, de manière que la quantité de barbotine déposée soit comprise entre 0,07 g/dm² et 0,2 g/dm² ; puis
• c3) le séchage et/ou cuisson de ladite couche d'émail pour former un biscuit sec d'émail (3) ou une couche d'émail cuite (3) ; et
**en ce que** l'étape d) de réalisation du revêtement antiadhésif (4) sur ledit biscuit sec d'émail (3) ou ladite couche d'émail cuite (3) comprend les étapes successives suivantes :
• d1) la préparation d'une composition sol-gel (A + B) comprenant au moins un oxyde métallique colloïdal et au moins un précurseur de type oxyde métallique ;
• d2) l'application sur tout ou partie du biscuit sec d'émail (3) ou de ladite couche d'émail cuite (3) d'au moins une couche de la composition sol-gel (A+B) ayant une épaisseur d'au moins 20 µm à l'état humide ; puis
• d3) la cuisson de ladite couche de composition sol-gel (A+B) pour obtenir un revêtement vitreux antiadhésif (4) d'au moins 10 µm d'épaisseur.

13. Procédé selon la revendication 12, **caractérisé en ce que** :
• ladite fritte d'émail comporte 30 à 40% en poids de silice et 15 à 30% en poids d'oxyde de titane, moins de 10% en poids d'oxyde de vanadium et moins de 4% en poids de d'oxyde de lithium par rapport au poids total de la fritte, et
• ladite barbotine aqueuse comporte au moins 20% en poids de charges minérales par rapport au poids total de barbotine.

14. Procédé selon la revendication 13, **caractérisé en ce que** l'étape d1) de préparation de la composition sol-gel (A+B) comprend successivement :
i) la préparation d'une composition aqueuse A comprenant 5 à 30% en poids par rapport au poids total de la composition aqueuse A d'au moins un oxyde métallique, et 0 à 20% en poids par rapport au poids de la composition A d'un solvant comprenant au moins un alcool, ladite composition aqueuse A pouvant en outre comprendre optionnellement au moins une huile de silicone ;
ii) la préparation d'une solution B comprenant au moins un précurseur de type alcoxyde métallique ;
iii) le mélange de la solution B d'alcoxyde métallique avec la composition aqueuse A pour obtenir une composition sol-gel (A+B) avec 40 à 75% en poids de composition aqueuse A par rapport au poids de la composition sol-gel (A+B), de manière que la quantité d'oxyde métallique colloïdal représente 5 à 30% poids de la composition sol-gel (A+B) à l'état sec.

15. Procédé selon la revendication 14, **caractérisé en ce que** l'oxyde métallique est un oxyde métallique colloïdal choisi dans le groupe constitué de la silice, l'alumine, l'oxyde de cérium, l'oxyde de zinc, l'oxyde de vanadium et l'oxyde de zirconium.

16. Procédé selon l'une quelconque des revendications 12 à 15, **caractérisé en ce que** le précurseur de type alcoxyde métallique de la solution B est choisi dans le groupe constitué par :
- les précurseurs répondant à la formule générale M₁(OR₁)ₙ,
- les précurseurs répondant à la formule générale M₂(OR₂)₍ₙ₋₁)R₂', et
- les précurseurs répondant à la formule générale M₃(OR₃)₍ₙ₋₂₎R₃'₂,
avec :
R₁, R₂, R₃ ou R₃' désignant un groupement alkyle,
R₂' désignant un groupement alkyle, phényle,
n étant un nombre entier correspondant à la valence maximale des métaux M₁, M₂ ou M₃
M₁ M₂ ou M₃ désignant un métal choisi parmi Si, Zr, Ti, Sn, Al, Ce, Nb Hf, Mg ou Ln,

17. Procédé selon la revendication 16, **caractérisé en ce que** l'alcoxyde métallique est un alcoxysilane, de préférence choisi parmi le méthyltriéthoxysilane (MTES) et le tétraéthoxysilane (TEOS).

18. Procédé selon l'une quelconque des revendications 12 à 17, **caractérisé en ce que** lors de l'étape c) de réalisation d'une base dure (3) émaillée et discontinue, la couche d'émail (3) non cuite est soit simplement séchée à une température comprise entre 120 et 200°C, soit soumise à un étuvage à une température comprise entre 500°C et 580°C.

## Patentansprüche

1. Kochartikel (1), der eine Metallauflage (2) umfasst, die eine konkave Innenseite (21), die dazu vorgesehen ist, auf der Seite von Lebensmitteln angeordnet zu werden, die dazu geeignet sind, in den besagten Artikel eingebracht zu werden, und eine konvexe Außenseite (22) aufweist, die dazu vorgesehen ist, gegen die Hitzequelle angeordnet zu werden, wobei die besagte Innenseite (21) von der Auflage (2) ausgehend nacheinander mit einer harten Basis (3) und einer Antihaftbeschichtung (4), die die besagte harte Basis (3) bedeckt, beschichtet wird,
**dadurch gekennzeichnet, dass**:
- die harte Basis (3) eine unterbrochene Emailschicht ist, die in der Form einer oberflächlichen Dispersion von Emailtropfen vorliegt, die homogen auf der Innenseite (21) des besagten Artikels (1) verteilt sind, mit einem Bedeckungsgrad der Innenseite (21) zwischen 40 % und 80 %, einer Oberflächendichte zwischen 300 Tropfen/mm² und 2000 Tropfen/mm² und einer Tropfengröße zwischen 2 µm und 50 µm, und
- die besagte Antihaftbeschichtung (4) eine Beschichtung des glasartigen Typs ist, die in der Form eines ununterbrochenen Films vorliegt, der eine Dicke von mindestens 10 µm hat und aus einem Sol-Gel-Material besteht, das eine Matrix von mindestens einem Metallpolyalkoxylat und mindestens 5 Gew.-% mindestens eines Metalloxids, bezogen auf das Gesamtgewicht der Beschichtung, umfasst, das in der besagten Matrix dispergiert ist.

2. Kochartikel (1) nach Anspruch 1, **dadurch gekennzeichnet, dass** die Innenseite (21) der Auflage (2) sandgestrahlt ist und eine Oberflächenrauheit Ra zwischen 3 µm und 8 µm aufweist.

3. Kochartikel (1) nach Anspruch 2, **dadurch gekennzeichnet, dass** die emaillierte und unterbrochene harte Basis (3) eine Oberflächenrauheit Ra zwischen 9 µm und 12 µm aufweist.

4. Kochartikel (1) nach Anspruch 1, **dadurch gekennzeichnet, dass** die Innenseite (21) der Auflage (2) glatt ist.

5. Kochartikel (1) nach Anspruch 4, **dadurch gekennzeichnet, dass** die emaillierte und unterbrochene harte Basis (3) eine Oberflächenrauheit zwischen 2 µm und 4 µm aufweist.

6. Kochartikel (1) nach einem der vorhergehenden Ansprüche, **dadurch gekennzeichnet, dass** die emaillierte und unterbrochene harte Basis (3) eine Härte aufweist, die größer gleich der des Metalls oder der Metalllegierung ist, das bzw. die die Auflage (2) bildet.

7. Kochartikel (1) nach einem der vorhergehenden Ansprüche, **dadurch gekennzeichnet, dass** das Metallpolyalkoxylat ein Polyalkoxysilan ist.

8. Kochartikel (1) nach einem der Ansprüche 1 bis 6, **dadurch gekennzeichnet, dass** das Metallpolyalkoxylat ein Aluminat ist.

9. Kochartikel (1) nach einem der Ansprüche 1 bis 6, **dadurch gekennzeichnet, dass** das Sol-Gel-Material eine gemischte Matrix von Polyalkoxysilan und Aluminat umfasst.

10. Kochartikel (1) nach einem der vorhergehenden Ansprüche, **dadurch gekennzeichnet, dass** das Metalloxid aus der Gruppe bestehend aus Siliciumdioxid, Aluminiumoxid, Ceroxid, Zinkoxid, Vanadiumoxid und Zirkoniumoxid ausgewählt ist.

11. Kochartikel (1) nach einem der vorhergehenden Ansprüche, **dadurch gekennzeichnet, dass** das Sol-Gel-Material, das die besagte Antihaftbeschichtung (2) bildet, außerdem mindestens ein Silikonöl umfasst, das vorzugsweise aus Methylphenylsilkonen und Methylsilikonen ausgewählt ist.

12. Verfahren zur Fertigung eines Kochartikels (1), **dadurch gekennzeichnet, dass** es die folgenden Schritte umfasst:
a) einen Schritt der Bereitstellung einer Auflage (2), die die Endform des Kochartikels aufweist, mit einer konkaven Innenseite (21), die dazu vorgesehen ist, auf der Seite von Lebensmitteln angeordnet zu werden, die dazu geeignet sind, in den besagten Artikel (1) eingebracht zu werden, und einer konvexen Außenseite (22), die dazu vorgesehen ist, auf der Seite einer Hitzequelle angeordnet zu werden;
b) gegebenenfalls einen Schritt der Behandlung der Innenseite (21) der Auflage (3), um eine behandelte Innenseite (21) zu erhalten, die für die Haftung einer harten Basis (3) auf der Auflage (2) angepasst ist, wobei der besagte Schritt der Behandlung ein Schritt der mechanischen Behandlung vom Sandstrahltyp sein kann;
c) einen Schritt der Umsetzung einer harten Basis (3), die auf der besagten Innenseite (21) der Auflage (2) haftet, gegebenenfalls vorher behandelt;
d) einen Schritt der Umsetzung einer Antihaftbeschichtung (4) auf der besagten harten Basis (3), die im Schritt c) gebildet wurde;
wobei das besagte Verfahren **dadurch gekennzeichnet ist, dass** der Schritt c) der Umsetzung einer emaillierten und unterbrochenen harten Basis (3) die folgenden sukzessiven Schritte umfasst:
- c1) Herstellen einer wässrigen Aufschlämmung einer Emailfritte;
- c2) Aufbringen der Aufschlämmung auf die Innenseite (21) der Auflage (2) durch Druckluftzerstäubung mit einem Druck, der größer gleich 4 bar ist, so dass die Menge der abgeschiedenen Aufschlämmung zwischen 0,07 g/dm² und 0,2 g/dm² liegt; dann
- c3) Trocknen und/oder Brennen der besagten Emailschicht, um einen trockenen Emailbiskuit (3) oder eine gebrannte Emailschicht (3) zu bilden; und
dass der Schritt (d) der Umsetzung der Antihaftbeschichtung (4) auf dem besagten trockenen Emailbiskuit (3) oder der besagten gebrannten Emailschicht (3) die folgenden sukzessiven Schritte umfasst:
- d1) Herstellen einer Sol-Gel-Zusammensetzung (A + B), die mindestens ein kolloidales Metalloxid und mindestens einen Vorläufer des Metalloxidtyps umfasst;
- d2) Aufbringen mindestens einer Schicht der Sol-Gel-Zusammensetzung (A + B) mit einer Dicke von mindestens 20 µm im feuchten Zustand auf dem gesamten oder einem Teil des trockenen Emailbiskuits (3) oder der besagten gebrannten Emailschicht (3); dann
- d3) Brennen der besagten Schicht der Sol-Gel-Zusammensetzung (A + B), um eine glasartige Antihaftbeschichtung (4) mit einer Dicke von mindestens 10 µm zu erhalten.

13. Verfahren nach Anspruch 12, **dadurch gekennzeichnet, dass**:
- die besagte Emailfritte 30 bis 40 Gew.-% Siliciumdioxid und 15 bis 30 Gew.-% Titanoxid, weniger als 10 Gew.-% Vanadiumoxid und weniger als 4 Gew.-% Lithiumoxid, bezogen auf das Gesamtgewicht der Fritte, umfasst und
- die besagte wässrige Aufschlämmung mindestens 20 Gew.-% mineralische Füllstoffe, bezogen auf das Gesamtgewicht der Aufschlämmung, umfasst.

14. Verfahren nach Anspruch 13, **dadurch gekennzeichnet, dass** der Schritt d1) der Herstellung der Sol-Gel-Zusammensetzung (A + B) sukzessiv Folgendes umfasst:
i) Herstellen einer wässrigen Zusammensetzung A, die 5 bis 30 Gew.-% mindestens eines Metalloxids, bezogen auf das Gesamtgewicht der wässrigen Zusammensetzung A, und 0 bis 20 Gew.-% eines Lösungsmittels, das mindestens einen Alkohol umfasst, bezogen auf das Gesamtgewicht der Zusammensetzung A, umfasst, wobei die besagte wässrige Zusammensetzung A außerdem gegebenenfalls mindestens ein Silikonöl umfassen kann;
ii) Herstellen einer Lösung B, die mindestens einen Vorläufer des Metallalkoxidtyps umfasst;
iii) Mischen der Metallalkoxidlösung B mit der wässrigen Zusammensetzung A, um eine Sol-Gel-Zusammensetzung (A + B) mit 40 bis 75 Gew.-% der wässrigen Zusammensetzung A, bezogen auf die Sol-Gel-Zusammensetzung (A + B), zu erhalten, so dass die kolloidale Metalloxidmenge 5 bis 30 Gew.-% der Sol-Gel-Zusammensetzung (A + B) im trockenen Zustand ausmacht.

15. Verfahren nach Anspruch 14, **dadurch gekennzeichnet, dass** das Metalloxid ein kolloidales Metalloxid ist, das aus der Gruppe bestehend aus Siliciumdioxid, Aluminiumoxid, Ceroxid, Zinkoxid, Vanadiumoxid und Zirkoniumoxid ausgewählt ist.

16. Verfahren nach einem der Ansprüche 12 bis 15, **dadurch gekennzeichnet, dass** der Vorläufer des Metallalkoxidtyps der Lösung B aus der Gruppe bestehend aus folgenden ausgewählt ist:
- Vorläufer, die der allgemeinen Formel M₁(OR₁)ₙ entsprechen,
- Vorläufer, die der allgemeinen Formel M₂(OR₂)₍ₙ₋₁₎R₂' entsprechen, und
- Vorläufer, die der allgemeinen Formel M₃(OR₃)₍ₙ₋₂₎R₃'₂ entsprechen,
wobei:
R₁, R₂, R₃ oder R₃' für eine Alkylgruppe steht,
R₂' für eine Alkyl-, Phenylgruppe steht,
n eine ganze Zahl ist, die der maximalen Wertigkeit der Metalle M₁, M₂ oder M₃ entspricht,
M₁, M₂ oder M₃ für ein Metall steht, das aus Si, Zr, Ti, Sn, Al, Ce, Nb, Hf, Mg oder Ln steht.

17. Verfahren nach Anspruch 16, **dadurch gekennzeichnet, dass** das Metallalkoxid ein Alkoxysilan ist, das vorzugsweise aus Methyltriethoxysilan (MTES) und Tetraethoxysilan (TEOS) ausgewählt ist.

18. Verfahren nach einem der Ansprüche 12 bis 17, **dadurch gekennzeichnet, dass** während des Schritts c) der Umsetzung einer emaillierten und unterbrochenen harten Basis (3) die ungebrannte Emailschicht (3) entweder einfach bei einer Temperatur zwischen 120 und 200 °C getrocknet oder einem Tempern bei einer Temperatur zwischen 500 °C und 580 °C unterzogen wird.

## Claims

1. Cookware item (1) comprising a metal supporting member (2) having a concave inner face (21) intended to be arranged facing the food liable to be introduced into said cookware and a convex outer face (22) intended to be arranged towards the heat source, said inner face (21) being coated successively from the supporting member (2) with a hard base (3) and a non-stick coating (4) covering said hard base (3),
**characterised in that**:
- the hard base (3) is a discontinuous enamel layer in the form of a superficial dispersion of enamel drops distributed homogeneously on the inner face (21) of said cookware (1), with a rate of coverage of the inner face (21) between 40% and 80%, a surface density between 300 drops/mm², and 2000 drops/mm² and a drop size between 2 µm and 50 µm, and
- said non-stick coating (4) is a vitreous type coating in the form of a continuous film having a thickness of at least 10 µm and consisting of a sol-gel material comprising a matrix of at least one metal polyalkoxylate and at least 5% by weight with respect to the total weight of the coating of at least one metal oxide dispersed in said matrix.

2. Cookware item (1) according to claim 1, **characterised in that** the inner face (21) of the supporting member (2) is sandblasted and has a surface roughness Ra between 3 µm and 8 µm.

3. Cookware item (1) according to claim 2, **characterised in that** the discontinuous enamelled hard base (3) has a surface roughness Ra between 9 µm and 12 µm.

4. Cookware item (1) according to claim 1, **characterised in that** the inner face (21) of the supporting member (2) is smooth.

5. Cookware item (1) according to claim 4, **characterised in that** the discontinuous enamelled hard base (3) has a surface roughness between 2 µm and 4 µm.

6. Cookware item (1) according to any of the above claims, **characterised in that** the discontinuous enamelled hard base (3) has a hardness greater than or equal to that of the constituent metal or metal alloy of the supporting member (2).

7. Cookware item (1) according to any of the above claims, **characterised in that** the metal polyalkoxylate is a polyalkoxysilane.

8. Cookware item (1) according to any of claims 1 to 6, **characterised in that** the metal polyalkoxylate is an aluminate.

9. Cookware item (1) according to any of claims 1 to 6, **characterised in that** the sol-gel material comprises a composite polyalkoxysilane and aluminate matrix.

10. Cookware item (1) according to any of the above claims, **characterised in that** the metal oxide is chosen from the group consisting of silica, alumina, cerium oxide, zinc oxide, vanadium oxide and zirconium oxide.

11. Cookware (1) according to any of the above claims, **characterised in that** the constituent sol-gel material of said non-stick coating (2) further comprises at least one silicone oil, which is preferably chosen from methyl-phenyl silicones and methyl silicones.

12. Method for manufacturing a cookware item (1), **characterised in that** it comprises the following steps:
a) a step for providing a supporting member (2) having the final shape of the cookware item with a concave inner face (21) intended to be arranged facing the food liable to be introduced into said cookware (1), and a convex outer face (22) intended to be arranged facing a heat source;
b) optionally, a step for treating the inner face (21) of the supporting member (3) to obtain a treated inner face (21) adapted to the adherence of a hard base (3) on the supporting member (2), said treatment step optionally being a mechanical treatment step such as sandblasting;
c) a step for producing an adherent hard base (3) on said inner face (21) of the supporting member (2), optionally pre-treated;
d) a step for producing a non-stick coating (4) on said hard base (3) formed in step c);
said method being **characterised in that** step c) for producing a discontinuous enamelled hard base (3) comprises the following successive steps:
- c1) preparing an aqueous enamel frit slip;
- c2) applying the slip by pneumatic spraying onto the inner face (21) of the supporting member (2) with a pressure greater than or equal to 4 bar, such that the quantity of slip deposited is between 0.07 g/dm² and 0.2 g/dm²; and
- c3) drying and/or curing said enamel layer to form an enamel bisque (3) or a cured enamel layer (3) ; and
**in that** step d) for producing the non-stick coating (4) on said enamel bisque (3) of said cured enamel layer (3) comprises the following successive steps:
- d1) preparing a sol-gel composition (A + B) comprising at least one colloidal metal oxide and at least one metal oxide type precursor;
- d2) applying, on all of part of the enamel bisque (3) or of said cured enamel layer (3), at least one layer of the sol-gel composition (A+B) having a thickness of at least 20 µm in the wet state; and
- d3) curing said layer of sol-gel composition (A+B) to obtain a non-stick vitreous coating (4) at least 10 µm in thickness.

13. Method according to claim 12, **characterised in that**:
- said enamel frit comprises 30 to 40% by weight of silica and 15 to 30% by weight of titanium oxide, less than 10% by weight of vanadium oxide and less than 4% by weight of lithium oxide with respect to the total weight of the frit, and
- said aqueous slip comprises at least 20% by weight of mineral filler with respect to the total weight of slip.

14. Method according to claim 13, **characterised in that** step d1) for preparing the sol-gel composition (A+B) successively comprises:
i) preparing an aqueous composition A comprising 5 to 30% by weight with respect to the total weight of the aqueous composition A of at least one metal oxide, and 0 to 20% by weight with respect to the weight of the composition A of a solvent comprising at least one alcohol, said aqueous composition A further optionally comprising at least one silicone oil;
ii) preparing a solution B comprising at least one metal alkoxide type precursor;
iii) mixing the metal alkoxide solution B with the aqueous composition A to obtain a sol-gel composition (A+B) with 40 to 75% by weight of aqueous composition A with respect to the weight of the sol-gel composition (A+B), such that the quantity of colloidal metal oxide represents 5 to 30% by weight of the sol-gel composition (A+B) in the dry state.

15. Method according to claim 14, **characterised in that** the metal oxide is a colloidal metal oxide chosen from the group consisting of silica, alumina, cerium oxide, zinc oxide, vanadium oxide and zirconium oxide.

16. Method according to any of claims 12 to 15, **characterised in that** the metal alkoxide type precursor of the solution B is chosen from the group consisting of:
- the precursors complying with the general formula M₁(OR₁)ₙ,
- the precursors complying with the general formula M₂(OR₂)₍ₙ₋₁₎R₂', and
- the precursors complying with the general formula M₃(OR₃)₍ₙ₋₂₎R₃'₂,
where:
R₁, R₂, R₃ or R₃' denote an alkyl group,
R₂' denotes an alkyl, phenyl group,
n is an integer corresponding to the maximum valence of the metals M₁, M₂ or M₃
M₁, M₂ or M₃ denote a metal chosen from Si, Zr, Ti, Sn, Al, Ce, Nb Hf, Mg or Ln.

17. Method according to claim 16, **characterised in that** the metal alkoxide is an alkoxysilane, preferably chosen from methyltriethoxysilane (MTES) and tetraethoxysilane (TEOS).

18. Method according to any of claims 12 to 17, **characterised in that**, during step c) for producing a discontinuous enamelled hard base (3), the uncured enamel layer (3) is either merely dried at a temperature between 120 and 200°C, or oven-dried at a temperature between 500°C and 580°C.
